# EUROPÄISCHE PATENTSCHRIFT

(11) **EP 1 800 028 B1**
(45) Veröffentlichungstag und Bekanntmachung des Hinweises auf die Patenterteilung: **02.12.2009**
(21) Anmeldenummer: 05792762.6
(22) Anmeldetag: 24.09.2005
(51) Int. Cl.: F16H 57/02

(54) **GETRIEBEREIHE**
GEARBOX RANGE
GAMME DE BOITE DE VITESSES

(30) Priorität: 08.10.2004 DE 102004049443
(43) Veröffentlichungstag der Anmeldung: 27.06.2007
(73) Patentinhaber: SEW-EURODRIVE GmbH & Co. KG, 76646 Bruchsal (DE)
(72) Erfinder: MÜLLER, Mathias, 76437 Rastatt (AT); BARTON, Peter, 75015 Bretten (DE)
(74) Vertreter: Tüngler, Eberhard
(86) Internationale Anmeldenummer: PCT/EP2005/010349
(87) Internationale Veröffentlichungsnummer: WO 2006/039997

(56) Entgegenhaltungen:
- WO-A-94/01700
- DE-A1- 3 705 812
- DE-A1- 4 012 188
- NL-A- 7 213 752
- US-A- 3 673 885

## Beschreibung

Die Erfindung betrifft eine Getriebereihe..

Aus der gattungsgemäßen DE 37 05 812 ist eine Getriebereihe bekannt, die mehrere Getriebegrößen umfasst, wobei einem Getriebe einer Getriebegröße ein weiteres Getriebe zugeordnet ist, das sich von dem erstgenannten nur darin unterscheidet, dass **nur** das Abtriebszahnrad gegen ein größeres Zahnrad ausgetauscht ist und somit ein größerer Achsabstand in der letzten Getriebestufe vorgesehen ist. Vorteilig ist bei einer solchen Zwischengröße, dass für die Reihe nur ein zusätzliches Endrad notwendig ist, um eine zusätzliche Größe zu liefern,

Wenn darüber hinaus der Übersetzungssprung zwischen den Getrieben gleich dem Momentensprung ist, dann sind alle Vorstufen gleich belastet. Die Wiederverwendung der Vorstufen ist in diesem Fall also optimal ausgeführt, da die Vorstufen nicht überdimensioniert sind.

Nachteiligerweise gerät die Übersetzung der Zwischengröße sehr groß und daher wird auch der zugehörige Achsabstand groß. Ebenso wird auch der Durchmesser des Endrades groß.. Dies führt zu hohen Kosten für das Endrad und außerdem zu unterschiedlichen Minimal- und Maximal-Übersetzungen bei Hauptgröße und Zwischengröße.

Nachteilig ist auch, dass die Endstufenübersetzung der Zwischengröße stark abweicht von der für den Achsabstand optimalen Übersetzung. Denn bei vorgegebenem Achsabstand kann zwar die Zähnezahl des Endrades erhöht werden, jedoch ist ab einer kritischen Zähnezahl die Tragfähigkeit der Zähne eingeschränkt

Begrifflich stellen die Hauptgrößen und Zwischengrößen Baugrößen der Getriebereihe dar, wobei die Baugrößen kennzeichenbar sind durch den genannten Achsabstand der letzten Getriebestufe.

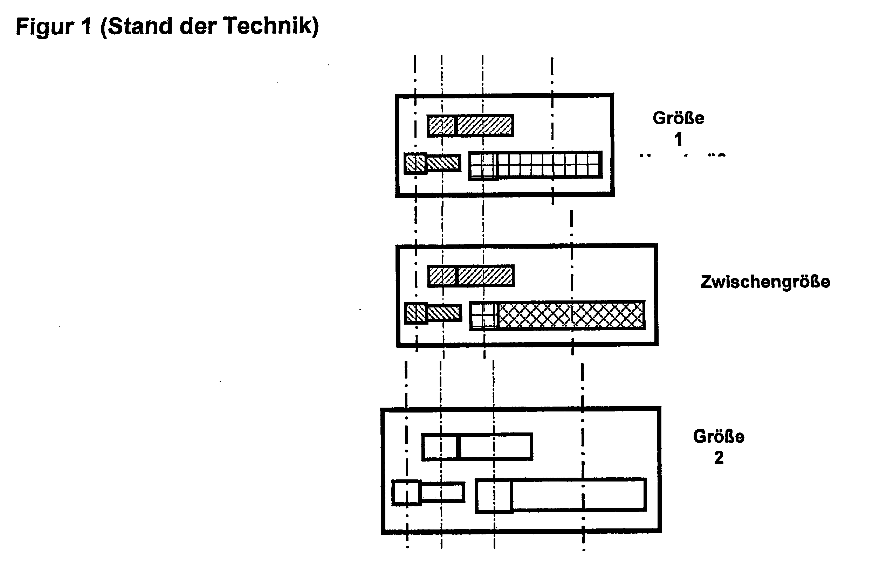

Aus der DE 40 12 188 A1 ist ebenfalls eine Getriebereihe bekannt, die aber anders aufgebaut ist. Dort ist nämlich offenbart, dass zu jeder Baugröße B, also zu jedem abtriebsseitigen Achsabstand, eine Varianzstufe gehört, die einen eineindeutig zuordenbaren Achsabstand A aufweist. Es besteht also eine bijektive Zuordnung der Baugröße zum Achsabstand. Dies bedeutet, dass in der dort in der Figur 1 gezeigten Matrix die Baugrößenspalte B_1 bis B_4 jeweils eine Achsabstandsspalte A_1 bis A_4 zugeordnet ist. In dieser Schrift ist es auch betont, dass jeder Baugröße ein Jeweiliger Achsabstand zugeordnet ist (Spalte 6, Zeile 55 - 58) Genau bei dieser Realisierung ist dort nun die Wiederverwendung eines Verzahnungsteiles bei mindestens zwei verschiedenen, aufeinander folgenden Baugrößen offenbart. Konkret ausgedrückt, bedeutet dies, dass bei einem zweistufigen Getriebe die erste Baugröße durch einen Achsabstand B_1 der abtreibenden Stufe und die zweite Baugröße durch einen Achsabstand B_2 der abtreibenden Stufe realisiert ist

Bei der ersten Baugröße weist dann die eintreibende Stufe einen Achsabstand A_1 auf und bei der ersten Baugröße weist dann die eintreibende Stufe einen Achsabstand A_2 auf.

Nachteilig Ist bei dieser Schrift, dass die Anzahl der bei der anderen Baugröße wiederverwendbaren Teile gering ist, nämlich nur ein Verzahnungstell.

Aus der WO 941/01700 A1 ist eine Getriebereihe bekannt, bei der zu einer Getriebevariante nach Figur 1 innerhalb der Reihe eine weitere Variante herstellbar ist, die eine zusätzliche Stufe - entweder gemäß Figur 2 eintreibend oder gemäß Figur 3 abtreibend - aufweist. Die anderen Stufen sind unverändert

Der Erfindung liegt daher die Aufgabe zugrunde, eine Getriebereihe weiterzubilden, wobei die Fertigung kostengünstig und die Lagervolumina reduzierbar sind.

Erfindungsgemäß wird die Aufgabe bei Getriebereihe nach den in Anspruch 1 angegebenen Merkmalen gelöst..

Wesentliche Merkmale der Getriebereihe sind, dass die Getriebereihe für mehrstufige Getriebe mit steigenden Abtriebsdrehmomenten vorgesehen ist, wobei die Getriebereihe Hauptgrößen von Getrieben umfasst,
wobei zu mindestens einer Hauptgröße eine Zwischengröße vorgesehen ist,
wobei die Zwischengröße alle Getriebestufen der Hauptgröße mit Ausnahme der letzten Getriebestufe, umfassend Rad und Ritzel, der Hauptgröße entsprechend aufweist, also auch mit unverändertem Achsabstand,
wobei die letzte Getriebestufe der Zwischengröße einen kleineren Achsabstand als die zugeordnete Hauptgröße aufweist und sowohl Rad als auch Ritzel der letzten Getriebestufe unterschiedlich sind von der letzten Getriebestufe der zugeordneten Hauptgröße,
wobei diese letzte Getriebestufe der Zwischengröße die gleiche Übersetzung wie die Übersetzung der letzten Getriebestufe der zugeordneten Hauptgröße aufweist.

Vorteiligerweise ist aber innerhalb der Getriebereihe die anbietbaren Größen bis zur doppelten Menge erweiterbar, da jeder Hauptgröße eine Zwischengröße zuordenbar und vorsehbar ist,

Weiter vorteilig ist auch, dass eintriebsseitige Anbauteile unverändert übernommen werden können. Somit sind also Kosten einsparbar, insbesondere auch bei der Peripherie des Getriebes. Weiter vorteilig ist, dass die Vorstufen gleich belastbar sind,

Die bei der Zwischengrößen weist also bei allen Getriebestufen mit Ausnahme der letzten Getriebestufe dieselben unveränderten Achsabstände auf wie die zugehörige Hauptgröße.

Insbesondere ist dabei die letzte Getriebestufe die abtriebsseitige Getriebestufe.

Bei der vorliegenden Erfindung wird die Menge aller Baugrößen der Baureihen aus der Menge aller Zwischengrößen und Hauptgrößen gebildet Jeder Baugröße ist ein eindeutig zuordenbarer Achsabstand der abtriebsseitigen Getriebestufe zugeordnet. Das heißt, dass jede Baugröße durch einen solchen Achsabstand bezeichenbar ist und dass zu jedem solchen Achsabstand nur eine einzige Baugröße gehört.
Jede Baugröße ist dabei entweder eine Zwischengröße oder eine Hauptgröße. Die Wortbildung Zwischengröße und Hauptgröße macht bei der Erfindung klar, dass zu einer als Hauptgröße ausgeführten Baugröße eine als Zwischengröße zugeordnete Baugröße existiert. Diese Zuordnung ist durch die beschriebene Wiederverwendung von Teilen erzeugt

Bei einer vorteilhaften Ausgestaltung unterscheiden sich die maximal übertragbaren Drehmomente der aufeinander folgenden Hauptgrößen um einen Faktor Alternativ unterscheiden sich die Gesamtübersetzungen der aufeinander folgenden Hauptgrößen um einen Faktor. Von Vorteil ist dabei, dass mit wenigen Getrieben ein weiter Bereich von maximal übertragbaren Drehmomenten und Übersetzungen erreichbar ist.. Mittels der Zwischengrößen sind zusätzlich zu den von den Hauptgrößen erzeugbare Übersetzungen und/oder Drehmomente erzeugbar.

Bei einer vorteilhaften Ausgestaltung sind die Gesamtübersetzungen nach der Reihe R20 festgelegt. Von Vorteil ist dabei, dass die am Markt auf diese Norm angepassten Vorrichtungen an die Getriebe der Getriebereihe anschließbar sind,

Bei einer vorteilhaften Ausgestaltung nehmen die Achsabstände von der An- zur Abtriebswelle in jeder Getriebestufe nach einer mathematischen Folge oder Reihe zu (a1, a2, a3), Insbesondere entsprechen die aufeinander folgenden Achsabstände bei der Zwischengröße nicht dem nächstfolgenden Glied der Folge, ausgehend von der nächstgrößeren Hauptgröße. Von Vorteil ist dabei, dass eine feinere Drehmoment und/oder Übersetzungszahlabstufung erreichbar ist mit wenigen zusätzlichen Bauteilen.

Bei einer vorteilhaften Ausgestaltung weist die letzte Getriebestufe der Zwischengrößen einen größeren Achsabstand als die zur zugeordneten Hauptgröße nächstkleinere Hauptgröße auf, Von Vorteil ist dabei, dass das abgebbare Drehmoment vergrößerbar ist im Vergleich zu dem von der Hauptgröße abgegebenen Drehmomente Analoges gilt für die Übersetzungen,

Weitere Vorteile ergeben sich aus den Unteransprüchen..

### Bezugszeichenliste

- 1: Hauptgröße
- 2: Hauptgröße
- 2-x: Zwischengröße

Figur 1 zeigt nochmals den Stand der Technik. Dabei umfasst die Getriebereihe zwei Hauptgrößen. Jedes Getriebe ist dabei dreistufig ausgeführt. Das größte und somit kostspieligste Verzahnungsteil ist das abtriebsseitig vorgesehene Endrad. Die Zwischengröße ergibt sich dadurch, dass das Endrad der ersten, also in Figur 1 kleineren Hauptgröße ausgetauscht ist gegen ein größeres Endrad, Die Dimensionierung der Vorstufen ist dadurch unverändert korrekt ausgeführt. Es liegt keine Überdimensionierung vor.

Die Erfindung wird nun anhand von weiteren Figuren erläutert:

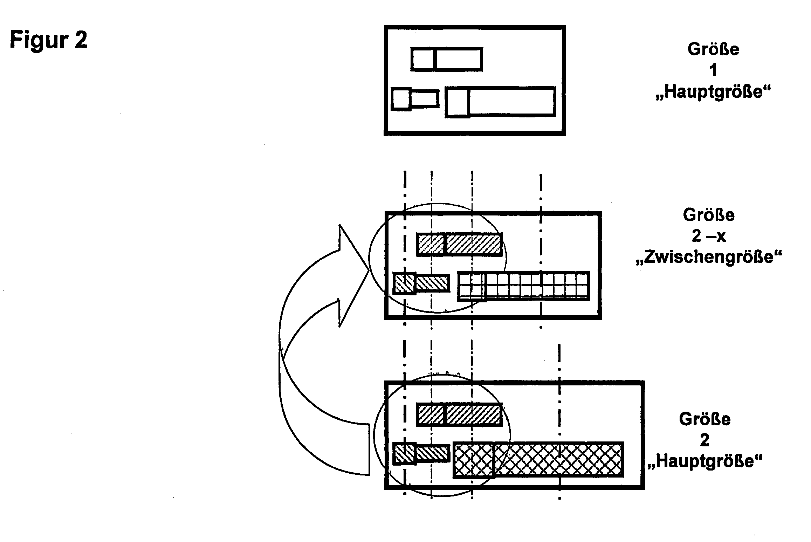

In der Figur 2 ist eine erfindungsgemäße Getriebereihe gezeigt, die ebenfalls zwei Hauptgrößen umfaßt. Die Zwischengröße geht aber aus der größeren Hauptgröße hervor Sie wird aus der größeren Hauptgröße erzeugt, indem nur die dritte Stufe, also die abtriebsseitig vorgesehene Getriebestufe, verändert wird. Die erste und zweite Stufe des Getriebes der größeren der beiden Hauptgrößen bleibt unverändert. Die dritte Stufe ist also kleiner ausgeführt als bei der größeren Hauptgröße,

Somit ist bei der Zwischengröße die erste und zweite Stufe überdimensioniert Vorteiligerweise ist aber innerhalb der Getriebereihe die anbietbaren Größen bis zur doppelten Menge erweiterbar, da jeder Hauptgröße eine Zwischengröße zuordenbar und vorsehbar ist,

Weiter vorteilig ist auch, dass eintriebsseitige Anbauteile unverändert übernommen werden können, Somit sind also Kosten einsparbar, insbesondere auch bei der Peripherie des Getriebes. Weiter vorteilig ist, dass die Vorstufen gleich belastbar sind,

Darüber hinaus sind vorteilhafte Synergieen im Bereich der Gussgestaltung vorhanden, da nur der Gehäusebereich um die abtreibende Stufe herum bei der Zwischengröße verändert werden muss.

Vorteile sind auch vorhanden, indem kleinere Endstufenübersetzungen als beim Stand der Technik realisierbar sind.. Es ist insbesondere ein kleinerer Achsabstand vorsehbar und somit geringere Kosten vorhanden..

Bei weiteren erfindungsgemäßen Ausführungsbeispielen sind die Hauptgrößen gemäß der Normreihe R20 gestuft ausgeführt.

Bei weiteren erfindungsgemäßen Ausführungsbeispielen verringert sich der Stufensprung mit zunehmender Getriebegröße, beispielsweise von 1,3 bei kleinen Getrieben bis 1,1 bei großen Getrieben

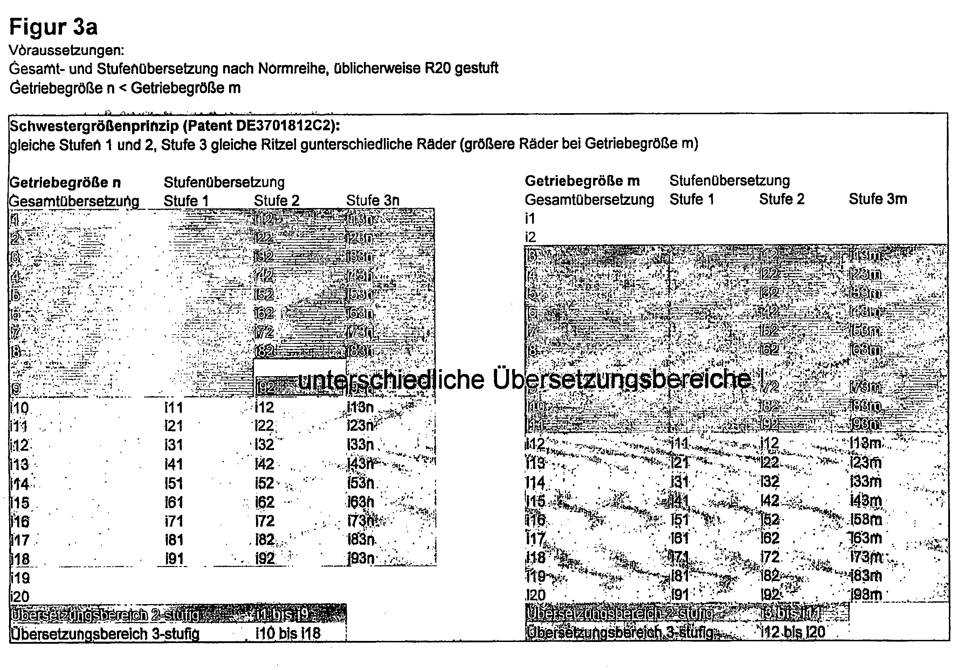

Figur 3a zeigt eine Tabelle der erreichbaren Übersetzungen mittels des Standes der Technik. Im linken Teil finden sich die zweistufig und dreistufig erreichbaren Übersetzungen. Im rechten Teil die mit den vorgesehenen Zwischengrößen erreichbaren Übersetzungen Dabei sind die Übersetzungsbereiche unterschiedlich,

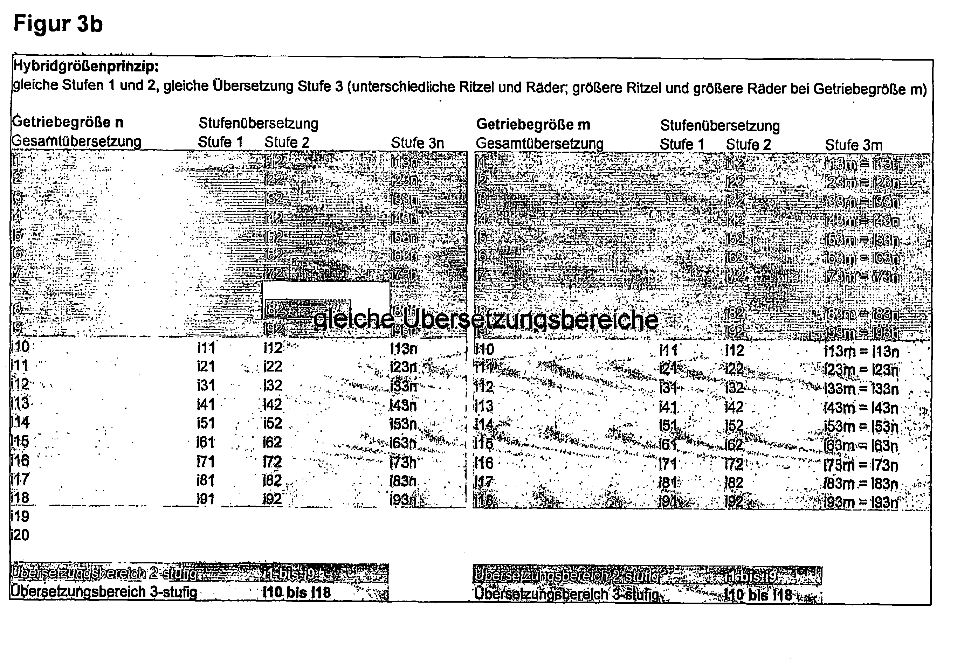

Figur 3b zeigt im Gegensatz dazu den eine Tabelle der erreichbaren Übersetzungen mittels der Erfindung, Im linken Teil finden sich die zweistufig und dreistufig erreichbaren Übersetzungen. Im rechten Teil die mit den vorgesehenen Zwischengrößen erreichbaren Übersetzungen. Dabei sind die Übersetzungsbereiche gleich.

Bei der Erfindung sind Zwischengrößen und Hauptgrößen durch den jeweiligen abtriebsseitigen Achsabstand charakterisierbar und bilden zusammen die Menge der Baugrößen bei der Getriebereihe. Eine Baugröße ist dabei entweder durch eine Zwischengröße oder durch eine Hauptgröße eindeutig realisiert,

## Patentansprüche

1. Getriebereihe für mehrstufige Getriebe mit steigenden Abtriebsdrehmomenten,
umfassend Hauptgrößen von Getrieben,
**dadurch gekennzeichnet, dass**
zu mindestens einer Hauptgröße eine Zwischengröße vorgesehen ist,
wobei die Zwischengröße alle Getriebestufen der Hauptgröße mit Ausnahme der letzten Getriebestufe, umfassend Rad und Ritzen, der Hauptgröße entsprechend aufweist, also auch mit unverändertem Achsabstand,
wobei die letzte Getriebestufe der Zwischengröße einen kleineren Achsabstand als die zugeordnete Hauptgröße aufweist und sowohl Rad als auch Ritzel der letzten Getriebestufe unterschiedlich sind von der letzten Getriebestufe der zugeordneten Hauptgröße,
wobei diese letzte Getriebestufe der Zwischengrößen die gleiche Übersetzung wie die Übersetzung der letzten Getriebestufe der zugeordneten Hauptgröße aufweist,

2. Getriebereihe nach Anspruch 1,
**dadurch gekennzeichnet, dass**
jede Zwischengröße und jede Hauptgröße durch einen abtriebsseitigen Achsabstand eindeutig charakterisierbar ist, insbesondere als Baugröße.

3. Getriebereihe nach mindestens einem der vorangegangenen Ansprüche,
**dadurch gekennzeichnet, dass**
die letzte Getriebestufe die abtriebsseitige Getriebestufe ist,

4. Getriebereihe nach mindestens einem der vorangegangenen Ansprüche,
**dadurch gekennzeichnet, dass**
die maximal übertragbaren Drehmomente der aufeinander folgenden Hauptgrößen sich um einen Faktor unterscheiden.

5. Getriebereihe nach mindestens einem der vorangegangenen Ansprüche,
**dadurch gekennzeichnet, dass**
die Gesamtübersetzungen der aufeinander folgenden Hauptgrößen sich um einen Faktor unterscheiden.

6. Getriebereihe nach mindestens einem der vorangegangenen Ansprüche,
**dadurch gekennzeichnet, dass**
die Gesamtübersetzungen nach der Reihe R20 festgelegt sind..

7. Getriebereihe nach mindestens einem der vorangegangenen Ansprüche,
**dadurch gekennzeichnet, dass**
die Achsabstände von der An- zur Abtriebswelle in jeder Getriebestufe nach einer mathematischen Folge oder Reihe zunehmen (a1, a2, a3),

8. Getriebereihe nach mindestens einem der vorangegangenen Ansprüche,
**dadurch gekennzeichnet, dass**
die aufeinander folgenden Achsabstände bei der Zwischengröße nicht dem nächstfolgenden Glied der Folge entsprechen, ausgehend von der nächstgrößeren Hauptgröße.

9. Getriebereihe nach mindestens einem der vorangegangenen Ansprüche,
**dadurch gekennzeichnet, dass**
die letzte Getriebestufe der Zwischengröße einen größeren Achsabstand als die zur zugeordneten Hauptgröße nächstkleinere Hauptgröße aufweist..

## Claims

1. A gear series for multistage gearing with increasing drive torques, comprising main sizes of gears, **characterised in that** an intermediate size is provided for at least one main size, wherein correspondent to the main size, the intermediate size has all gearing stages of the main size with the exception of the last gearing stage, comprising wheel and pinion, therefore also with an unchanged centre distance, wherein the last gearing stage of the intermediate size has a smaller centre distance than the associated main size and both the wheel and the pinion of the last gearing stage differ from the last gearing stage of the associated main size, wherein this last gearing stage of the intermediate size has the same gear ratio as the gear ratio of the last gearing stage of the associated main size.

2. A gear series according to claim 1, **characterised in that** each intermediate size and each main size can be clearly **characterised by** an output-side centre distance, in particular as an overall size.

3. A gear series according to at least one of the preceding claims, **characterised in that** the last gearing stage is the output-side gearing stage.

4. A gear series according to at least one of the preceding claims, **characterised in that** the maximum transmittable torques of the successive main sizes differ by a factor.

5. A gear series according to at least one of the preceding claims, **characterised in that** the overall gear ratios of the successive main sizes differ by a factor.

6. A gear series according to at least one of the preceding claims, **characterised in that** the overall gear ratios are determined according to the R20 series.

7. A gear series according to at least one of the preceding claims, **characterised in that** the centre distances from the drive shaft to the driven shaft in each gearing stage increase in accordance with a mathematical sequence or progression (a1, a2, a3).

8. A gear series according to at least one of the preceding claims, **characterised in that** the successive centre distances in the case of the intermediate size do not correspond to the following member of the sequence, starting from the next largest main size.

9. A gear series according to at least one of the preceding claims, **characterised in that** the last gearing stage of the intermediate size has a greater centre distance than the next smallest main size after the associated main size.

## Revendications

1. Gamme de transmissions pour des transmissions à plusieurs étages ayant des couples de sortie croissants,
comprenant des tailles principales de transmissions,
**caractérisée en ce qu'**une taille intermédiaire est associée à au moins une taille principale,
sachant que la taille intermédiaire présente - à l'exception du dernier étage de transmission comprenant roue dentée et pignon - tous les étages de transmission de la taille principale d'une manière correspondante à la taille principale, donc également avec un entraxe inchangé,
sachant que le dernier étage de transmission de la taille intermédiaire présente un plus petit entraxe que la taille principale associée, et que tant la roue dentée que le pignon du dernier étage de transmission sont différents de ceux du dernier étage de transmission de la taille principale associée,
sachant que ce dernier étage de transmission de la taille intermédiaire présente la même démultiplication que le dernier étage de transmission de la taille principale associée.

2. Gamme de transmissions selon la revendication 1, **caractérisée en ce que** chaque taille intermédiaire et chaque taille principale peuvent être **caractérisées** de façon univoque, en particulier en tant que taille de construction, par leur entraxe du côté de sortie.

3. Gamme de transmissions selon au moins une des revendications précédentes, **caractérisée en ce que** le dernier étage de transmission est l'étage de transmission du côté de sortie.

4. Gamme de transmissions selon au moins une des revendications précédentes, **caractérisée en ce que** les couples maximaux qui peuvent être transmis par les tailles principales successives se différencient chaque fois d'un facteur.

5. Gamme de transmissions selon au moins une des revendications précédentes, **caractérisée en ce que** les démultiplications totales des tailles principales successives se différencient chaque fois d'un facteur.

6. Gamme de transmissions selon au moins une des revendications précédentes, **caractérisée en ce que** les démultiplications totales sont définies conformément à la série R20.

7. Gamme de transmissions selon au moins une des revendications précédentes, **caractérisée en ce que** les entraxes entre l'arbre d'entrée et l'arbre de sortie dans chaque étage de transmission augmentent selon une suite ou série mathématique (a1, a2, a3).

8. Gamme de transmissions selon au moins une des revendications précédentes, **caractérisée en ce que**, pour la taille intermédiaire, les entraxes successifs ne correspondent pas à l'élément immédiatement consécutif de la suite, en partant de la taille principale immédiatement supérieure.

9. Gamme de transmissions selon au moins une des revendications précédentes, **caractérisée en ce que** le dernier étage de transmission de la taille intermédiaire présente un plus grand entraxe que la taille principale immédiatement inférieure à la taille principale associée.
